**Europäisches Patentamt**

**European Patent Office**

**Office européen des brevets**

(19)

(11) Numéro de publication: **0 166 629
B1**

(12) **FASCICULE DE BREVET EUROPEEN**

(45) Date de publication du fascicule du brevet:
**30.03.88**

(51) Int. Cl.⁴: **B 32 B 31/26,** B 32 B 31/28, B 32 B 15/08

(21) Numéro de dépôt: **85400838.0**

(22) Date de dépôt: **29.04.85**

(54) **Perfectionnements aux feuilles composites métal-polymère et à leurs procédés et dispositifs de fabrication.**

(30) Priorité: **02.05.84 FR 8406801**

(43) Date de publication de la demande:
**02.01.86 Bulletin 86/1**

(45) Mention de la délivrance du brevet:
**30.03.88 Bulletin 88/13**

(84) Etats contractants désignés:
**DE GB IT**

(56) Documents cités:
**FR - A - 2 263 092
GB - A - 1 196 145
US - A - 3 647 592
US - A - 4 022 648
US - A - 4 179 324**

(73) Titulaire: **Lewiner, Jacques, 5, rue Bory d'Arnex,
F-92210 Saint-Cloud (FR)**
Titulaire: **Hennion, Claude, 18, rue Flatters, F-75005 Paris
(FR)**

(72) Inventeur: **Lewiner, Jacques, 5, rue Bory d'Arnex,
F-92210 Saint-Cloud (FR)**
Inventeur: **Hennion, Claude, 18, rue Flatters,
F-75005 Paris (FR)**

(74) Mandataire: **Behaghel, Pierre et al, CABINET
PLASSERAUD 84 rue d'Amsterdam, F-75009 Paris (FR)**

## Description

L'invention concerne les feuilles composites formées par juxtaposition jointive d'une feuille mince de métal mécaniquement résistante et d'une feuille mince de polymère à résistivité électrique élevée, ainsi que les procédés et dispositif de fabrication de ces feuilles composites.

Les feuilles minces de métal ici considérées sont celles dont l'épaisseur est comprise entre 2 et 100 μm et qui sont généralement constituées en nickel ou en acier.

Les feuilles minces de polymère ici considérées sont celles dont l'épaisseur est comprise entre 5 et 50 μm et dont la résistivité électrique est supérieure à $10^{10}$ ohms-mètres, le matériau constitutif de ces feuilles étant notamment un polymère fluoré.

Pour un certain nombre d'applications dans le domaine des électrets et des éléments piézo-électriques, il est intéressant de disposer de feuilles composites du genre défini ci-dessus dont les composants ou feuilles élémentaires sont adhérés de façon intime et durable l'un contre l'autre.

Il est difficile de fabriquer de telles feuilles composites, vu la minceur de leurs composants.

On a proposé à cet effet d'interposer une couche de colle entre les deux faces en regard des feuilles élémentaires, mais ce procédé est difficile à mettre en oeuvre en raison des servitudes dues à l'étalement de la colle et à sa prise, et l'épaisseur de la couche de colle est relativement élevée en regard de celles des feuilles élémentaires à accoler.

On a proposé également de superposer l'une contre l'autre les deux feuilles élémentaires à accoler, de chauffer l'ensemble de ces feuilles superposées jusqu'au voisinage du ramollissement de la feuille en polymère et d'appliquer un potentiel électrique à travers cet ensemble chauffé en le faisant passer entre deux rouleaux-électrodes reliés à une source de tension continue et sollicités l'un vers l'autre.

Un tel processus, décrit par exemple dans les brevets US-A-3 647 592 et US-A-4 022 648, met peut-être en jeu une attaction électrostatique entre les deux feuilles élémentaires, mais cette attraction est localisée entre les deux rouleaux-électrodes et elle est donc de très courte durée en chaque point de l'interface de collage.

L'invention permet d'engendrer d'une manière très simple une telle attraction électrostatique de façon durable et sur une portion étendue de l'interface de collage, ce qui conduit à une application extrêmement serrée et tenace des deux feuilles élémentaires l'une contre l'autre.

A cet effet, le procédé selon l'invention comprend encore les deux étapes de superposition des deux feuilles élémentaires à accoler et de chauffage de l'ensemble jusqu'au ramollissement de la feuille en polymère, et il est caractérisé en ce que, entre ces deux étapes, on injecte des particules chargées électriquement dans la face, de la feuille en polymère, la plus éloignée de la feuille métallique tout en mettant cette dernière à la masse.

Dans des modes de réalisation avantageux, on a recours en outre à l'une et/ou à l'autre des dispositions suivantes:

— les feuilles élémentaires à accoler étant superposées sur un support métallique plat chauffable, avec la feuille en polymère au-dessus, on déplace la source de particules chargées électriquement au-dessus du support ainsi recouvert à la température ambiante de façon à balayer la face supérieure de la feuille en polymère et à y injecter des particules chargées, puis on chauffe le support et son revêtement jusqu'au ramollissement de la feuille en polymère,

— les feuilles élémentaires à accoler étant déroulées à partir de rouleaux de façon à être juxtaposées, on fait défiler l'ensemble de ces feuilles juxtaposées successivement en regard d'une source de particules chargées électriquement et en regard d'une source de calories.

L'invention comprend, mises à part ces dispositions principales, certaines autres dispositions qui s'utilisent de préférence en même temps et dont il sera plus explicitement question ci-après.

Dans ce qui suit, l'on va décrire des modes de réalisation préférés de l'invention en se référant au dessin ci-annexé d'une manière bien entendu non limitative.

La figure 1, de ce dessin, montre en coupe longitudinale une feuille composite au cours de sa fabrication selon l'invention.

Les figures 2 et 3 illustrent respectivement deux procédés de fabrication d'une telle feuille conformes à l'invention.

On commence par juxtaposer les deux feuilles minces à accoler, savoir une feuille 1 en métal et une feuille 2 en polymère.

La feuille 1 est constituée en un métal présentant une bonne résistance mécanique, par exemple en acier, cas dans lequel son épaisseur est comprise entre 10 et 100 μm, étant de préférence de l'ordre de 50 μm, ou en nickel, cas dans lequel son épaisseur est comprise entre 2 et 10 μm, étant de préférence de l'ordre de 4 à 5 μm.

La feuille 2 en polymère présente une épaisseur comprise entre 5 et 50 μm et une résistivité électrique élevée, savoir supérieure à $10^{10}$ ohms-mètres et de préférence supérieure à $10^{11}$ ohms-mètres.

Elle est généralement constituée en un polymère fluoré tel que le PTFE (polytétrafluoroéthylène), le FEP (polyfluorure d'éthylène propylène), le polymonochlorotrifluoroéthylène, le polyfluorure de vinylidène ou encore en polyéthylène, en polypropylène ... ou en l'un des copolymères de ces différentes substances.

On bombarde ensuite la face libre de la feuille 2 par des ions ou électrons émis à partir d'une source 3, alors que la feuille métallique 1 est mise à la masse.

Ladite source 3 est par exemple un filament 4 en tungstène doré de 50 μm de diamètre placé à environ 10 mm de la face à bombarder dans un capot métallique semi-cylindrique 5 mis à la masse et lui-même ouvert en regard de ladite face, notamment avec interposition d'une grille 6, le filament 4 et la grille 6 étant portés respectivement à des potentiels de – 7 000 volts et de – 1 000 volts.

Le bombardement en question a pour effet d'injecter dans la feuille 2, à proximité de sa face extérieure, des ions négatifs représentés en 7 par le signe –.

Ces ions induisent des charges-images positives, représentées en 8 par le signe +, dans la face en regard de la feuille métallique 1.

La présence de ces charges électriques de signes contraires dans respectivement les deux feuilles 1 et 2 se traduit par une attraction électrostatique extrêmement forte entre ces deux feuilles, attraction qui a été schématisée par les flèches F.

C'est dans cet état que l'on chauffe la feuille en polymère 2 jusqu'à son ramollissement, ce qui correspond en général à une température comprise entre 250 et 350°C, à l'aide d'une source de calories schématisée par la rampe de flammes 9.

Après refroidissement de la feuille composite 1, 2 ainsi obtenue, le collage à la fois électrique et thermique réalisé entre les deux feuilles élémentaires 1 et 2 qui la composent se révèle extrêmement solide: ces deux feuilles élémentaires sont parfaitement adhérées sur toute l'étendue de leurs faces en regard et cette excellente adhérence est conservée même après suppression de la polarisation électrique qui a contribué à son obtention.

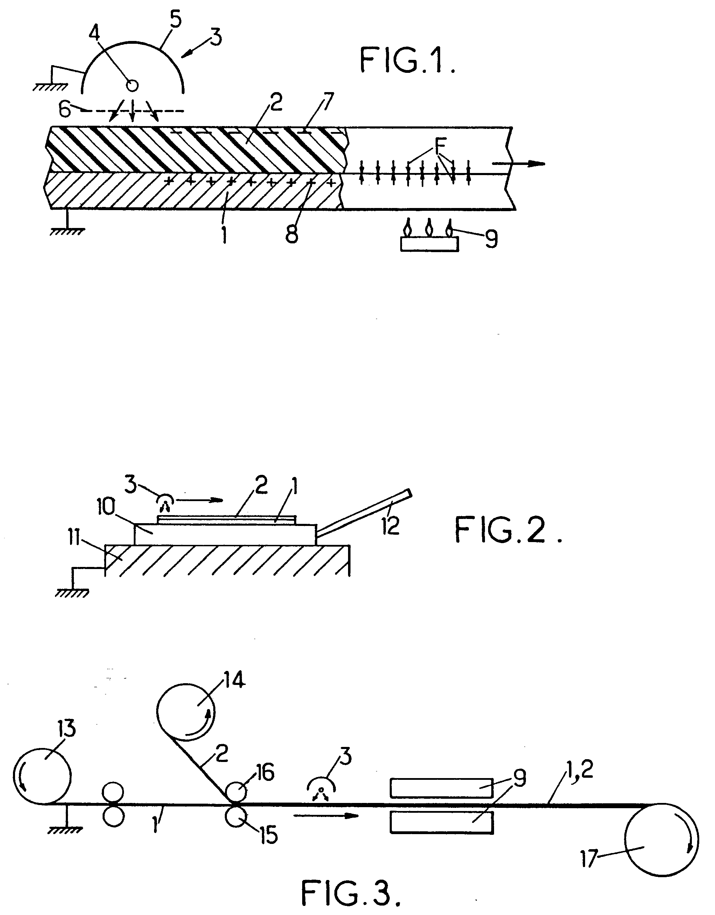

Les figures 2 et 3 illustrent schématiquement deux manières de conduire le procédé ci-dessus, l'une discontinue et l'autre continue.

Dans le procédé discontinu schématisé sur la figure 2, les deux feuilles élémentaires 1 et 2 à accoler sont superposées d'emblée sur toute leur étendue sur une plaque métallique 10, avec la feuille en polymère au-dessus, et ce à température ambiante.

Des moyens sont éventuellement prévus pour assurer un contact sans lacune entre les faces en regard de la plaque 10 et de la feuille 1 et entre celles des deux feuilles 1 et 2, moyens tels que des poids ou tendeurs (non représentés) répartis sur le pourtour de la feuille supérieure 2.

On balaye ensuite la face supérieure de la feuille 2 à l'aide d'une source d'ions 3 du genre de celle décrite ci-dessus, la plaque 10 étant mise à la masse, par exemple par son repos sur une embase métallique 11 elle-même mise à la masse.

A l'aide d'un manchon 12 solidaire de la plaque 10 et thermiquement isolé de celle-ci, on place ensuite cette plaque 10, revêtue des feuilles 1 et 2, sur un réchaud approprié (non représenté) jusqu'au ramollissement, voire la fusion, de la feuille 2, après quoi on replace l'ensemble sur l'embase 11.

Après refroidissement, l'ensemble des deux feuilles 1 et 2 ont fusionné en une feuille composite unique, à composants inséparables, qu'il suffit de détacher de la plaque 10.

Dans le procédé continu schématisé sur la figure 3, les deux feuilles élémentaires 1 et 2 à accoler sont débitées respectivement à partir de deux rouleaux 13 et 14 à des vitesses identiques, puis elles sont juxtaposées par leur passage commun entre deux rouleaux 15 et 16.

Elles défilent ensuite successivement en regard d'une source d'ions 3 du genre de celle décrite ci-dessus, cette source étant disposée du côté où se trouve la feuille en polymère 2, puis à l'intérieur d'un four 9 susceptible de chauffer la feuille 2 encore polarisée jusqu'à son ramollissement, voire à sa fusion.

La feuille composite 1, 2 sortant du four 9 est ensuite enroulée sur un rouleau aval 17.

En suite de quoi, et quel que soit le mode de réalisation adopté, on dispose finalement d'une feuille composite métal-polymère dont les deux composants sont liés d'une façon extrêmement intime et durable.

Une telle feuille composite peut être utilisée telle quelle pour certaines applications.

Pour d'autres applications, il peut être intéressant de charger à nouveau électriquement les feuilles diélectriques en polymère qui composent lesdites feuilles composites, par exemple de l'une des façons explicitées ci-dessus ou ci-dessous ou par polarisation électrique, les charges ainsi obtenues étant ensuite avantageusement stabilisées par un traitement thermique approprié: ces feuilles diélectriques chargées et stabilisées constituent des électrets ou des feuilles présentant des propriétés piézo-électriques ou pyroélectriques.

Comme il va de soi, et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes, notamment:

— celles où la source de particules chargées électriquement serait constituée autrement que par un filament porté à un potentiel négatif, par exemple par un canon à ions, ou par un canon à électrons, ou encore par un conducteur électrique porté à un potentiel approprié (par exemple à + 1 000 volts), disposé parallèlement à la face à charger de la feuille élémentaire en polymère 2 et relié à cette face par un tampon frottant imbibé d'un liquide, tel que l'alcool, suffisamment conducteur et à évaporation rapide,

— et celles où la feuille composite fabriquée selon l'invention serait non pas double, mais triple, la feuille métallique élémentaire 1 étant revêtue d'une feuille élémentaire 2 en polymère sur chacune de ses deux faces, ce pour quoi l'on procède à une injection de particules chargées électriquement dans chacune des deux feuilles élémentaires 2 accolées respectivement aux deux faces de la feuille métallique 1 maintenue à la masse, avant de chauffer le tout pratiquement jusqu'à la fusion des deux feuilles 2.

Il est à noter que l'énergie cinétique des particules chargées électriquement avec lesquelles on bombarde la face libre de la feuille en polymère doit être suffisamment faible pour que ces particules ne pénètrent pas trop profondément dans la feuille au point d'atteindre sa face contiguë à la feuille métallique, ce qui risquerait d'une part de les évacuer dans cette feuille et d'autre part de dégrader la structure polymérique traversée.

**Revendications**

1. Procédé pour juxtaposer une feuille mince (épaisseur entre 2 et 100 µm) de métal (1) mécaniquement résistante et une feuille mince (épaisseur entre 5 et 50 µm) de polymère (2) à résistivité électrique supérieure à $10^{10}$ ohms-mètres, selon lequel on superpose l'une contre l'autre les deux feuilles minces et l'on chauffe l'ensemble de ces feuilles superposées jusqu'au voisinage du ramollissement de la feuille en polymère, caractérisé en ce que, entre ces deux étapes de superposition et de chauffage, on injecte des particules chargées électriquement dans la face, de la feuille en polymère (2), la plus éloignée de la feuille métallique (1) tout en mettant cette dernière à la masse.

2. Procédé selon la revendication 1, selon lequel on superpose les feuilles élémentaires (1, 2) à accoler sur un support métallique plat (10), avec la feuille en polymère (2) au-dessus, caractérisé en ce que l'on déplace la source (3) de particules chargées électriquement au-dessus du support ainsi recouvert à la température ambiante de façon à balayer la face supérieure de la feuille en polymère et à y injecter des particules chargées électriquement, et en ce que l'on chauffe le support et son revêtement jusqu'au ramollissement de la feuille en polymère.

3. Procédé selon la revendication 1, selon lequel on déroule en continu les feuilles élémentaires (1, 2) à accoler à partir de rouleaux (13, 14) de façon à les juxtaposer (en 15, 16), caractérisé en ce que l'on fait défiler successivement l'ensemble de ces feuilles juxtaposées en regard d'une source (3) de particules chargées électriquement et en regard d'une source de calories (9).

4. Feuille composite obtenue par le procédé selon l'une quelconque des revendications 1 à 3, comprenant une feuille mince (épaisseur entre 2 et 100 μm), de métal (1) mécaniquement résistante et une feuille mince (épaisseur entre 5 et 50 μm) de polymère (2) à résistivité électrique supérieure à $10^{10}$ ohms-mètres adhérées l'une contre l'autre, caractérisée en ce que la feuille mince de polymère (= feuille diélectrique) est chargée électriquement en permanence.

**Patentansprüche**

1. Verfahren zum Verbinden einer dünnen (Stärke zwischen 2 und 100 μm), mechanisch widerstandsfähigen Metallfolie (1) und einer dünnen (Stärke zwischen 5 und 50 μm) Polymerfolie (2) mit einem spezifischen elektrischen Widerstand von mehr als $10^{10}$ Ohm·Meter, wobei man die dünnen Folien aufeinanderlegt und den aus diesen aufeinandergelegten Folien bestehenden Verbund bis in die Nähe der Erweichung der Polymerfolie erwärmt, dadurch gekennzeichnet, dass man zwischen den beiden Verfahrensschritten des Aufeinanderlegens und des Erwärmens in die der Metallfolie (1) abgewandte Seite der Polymerfolie (2) elektrisch geladene Teilchen injiziert, während man die Metallfolie (1) an Masse legt.

2. Verfahren nach Anspruch 1, bei dem man die zusammenzufügenden Ausgangsfolien (1, 2) auf einen ebenen metallischen Träger (10) legt, wobei die Polymerfolie (2) sich obenauf befindet, dadurch gekennzeichnet, dass man die Quelle (3) elektrisch geladener Teilchen bei Umgebungstemperatur derart über den so bedeckten Träger verschiebt, dass die Oberseite der Polymerfolie überstrichen wird und dort elektrisch geladene Teilchen injiziert werden, und dass man den Träger und seinen Überzug bis zur Erweichung der Polymerfolie erwärmt.

3. Verfahren nach Anspruch 1, bei dem man die zusammenzufügenden Ausgangsfolien (1, 2) kontinuierlich derart von Rollen (13, 14) abzieht, dass sie (in 15, 16) aufeinandergebracht werden, dadurch gekennzeichnet, dass man den Verbund dieser aufeinanderliegenden Folien vor einer Quelle (3) elektrisch geladener Teilchen und vor einer Wärmequelle (9) vorbeiwandern lässt.

4. Nach dem Verfahren nach einem der Ansprüche 1 bis 3 hergestellte Verbundfolie, die aus einer dünnen (Stärke zwischen 2 und 100 μm), mechanisch widerstandsfähigen Metallfolie (1) und einer dünnen (Stärke zwischen 5 und 50 μm) und Polymerfolie (2) mit einem spezifischen elektrischen Widerstand von mehr als $10^{10}$ Ohm·Meter besteht, wobei diese Folien aneinanderhaften, dadurch gekennzeichnet, dass die dünne Polymerfolie (= dielektrische Folie) eine permanente elektrische Ladung aufweist.

**Claims**

1. Method for juxtaposing a mechanically strong and thin (thickness between 2 and 100 μm) sheet of metal (1) and a thin (thickness between 5 and 50 μm) sheet (2) of a polymer having an electrical resistivity higher than $10^{10}$ ohms-meters, according to which the two thin sheets are superposed on each other and the whole of said superposed sheets is heated until almost softening of the polymer sheet, characterized in that, between said both steps of superposition and heating, electrically charged particles are injected into the face, of the polymer sheet (2), the most distant from the metal sheet (1), while said last mentioned sheet is earthed.

2. Method according to claim 1, according to which the elementary sheets (1, 2) to be joined together are superposed on a metallic flat support (10), with the polymer sheet above, characterized in that the source (3) of electrically charged particles is moved above the thus coated support at the ambient temperature so as to scan the upper face of the polymer sheet and to inject into said face electrically charged particles, and in that the support and its coating are heated until softening of the polymer sheet.

3. Method according to claim 1, according to which the elementary sheets (1, 2) to be joined together are continuously unrolled from rollers (13, 14) so as to juxtapose them (at 15, 16), characterized in that the whole of said juxtaposed sheets is successively defiling opposite a source (3) of electrically charged particles and opposite a source of calories (9).

4. Composite sheet obtained by the method according to any one of claims 1 to 3, comprising a mechanically strong and thin (thickness between 2 and 100 μm) sheet of metal (1) and a thin (thickness between 5 and 50 μm) sheet (2) of a polymer having an electrical resistivity higher than $10^{10}$ ohmsmeters adhered on each other, characterized in that the thin polymer (dieletric) sheet is permanently electrically charged.

FIG.1.

FIG.2.

FIG.3.